(19) Europäisches Patentamt
European Patent Office
Office européen des brevets

(11) **EP 3 827 320 B1**

(12) **FASCICULE DE BREVET EUROPEEN**

(45) Date de publication et mention de la délivrance du brevet:
**04.09.2024 Bulletin 2024/36**

(21) Numéro de dépôt: **19790630.8**

(22) Date de dépôt: **22.07.2019**

(51) Classification Internationale des Brevets (IPC):
**G01C 21/00** *(2006.01)* **B64D 43/00** *(2006.01)*

(52) Classification Coopérative des Brevets (CPC):
**G05D 1/0094; B64D 43/00; B64F 5/00; B64U 50/19; G01C 21/005; G01C 21/3807; G01C 21/3852; G01S 17/89;** B64U 10/13; B64U 30/20; B64U 2101/30; Y02B 10/30

(86) Numéro de dépôt international:
**PCT/FR2019/051822**

(87) Numéro de publication internationale:
**WO 2020/021191 (30.01.2020 Gazette 2020/05)**

(54) **ENGIN VOLANT MOTORISÉ DE MESURE DU RELIEF DE SURFACES D'UN OBJET PRÉDÉTERMINÉ ET PROCÉDÉ DE COMMANDE D'UN TEL ENGIN**

MOTORISIERTES LUFTFAHRZEUG ZUM MESSEN DES RELIEFS VON OBERFLÄCHEN EINES VORBESTIMMTEN OBJEKTS UND VERFAHREN ZUR STEUERUNG EINES SOLCHEN LUFTFAHRZEUGS

MOTORIZED FLYING CRAFT FOR MEASURING THE RELIEF OF SURFACES OF A PREDETERMINED OBJECT AND METHOD FOR CONTROLLING SUCH A CRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2018 FR 1856985**

(43) Date de publication de la demande:
**02.06.2021 Bulletin 2021/22**

(73) Titulaire: **Donecle**
**31400 Toulouse (FR)**

(72) Inventeurs:
• **CLAYBROUGH, Matthieu**
**31300 Toulouse (FR)**
• **DERUAZ-PEPIN, Alban**
**31130 Balma (FR)**
• **BEQUET, Josselin**
**31470 Fonsorbes (FR)**

(74) Mandataire: **Bringer IP**
**1, Place du Président Thomas Wilson**
**31000 Toulouse (FR)**

(56) Documents cités:
WO-A1-2017/153912 WO-A1-2017/186515
DE-A1- 102016 206 982 US-A1- 2016 378 895

## Description

### 1. Domaine technique de l'invention

L'invention concerne un robot d'inspection automatique de surface d'objets prédéterminés de grandes dimensions, tels que des aéronefs, des éoliennes, des navires, des ouvrages d'art, etc. permettant la détection et la mesureZ des reliefs des défauts de surface détectés.

### 2. Arrière-plan technologique

Le déposant a développé un système d'inspection automatique de surfaces d'objets de grandes dimensions, tels que des aéronefs, des éoliennes, des navires, des ouvrages d'art, des bâtiments, etc. qui permet de détecter d'éventuelles anomalies sur les surfaces inspectées, par exemple des impacts de foudre, des impacts de grêle, des traces de corrosion, des fissures, et d'une manière générale tous types de défaut des surfaces inspectées par rapport à un état nominal de ces surfaces. Ce système a fait l'objet de la demande de brevet WO2016203151.

Le document DE 10 2016 206982 A1 montre un drone équipé d'un scanner 3D pour examiner une structure. Le drone vole de manière autonome jusqu'à la structure, puis d'une partie de la structure à scanner à la partie suivante à examiner. Ce faisant, le scanner émet de la lumière, ce qui facilite la détection de dommages sur la structure. Le scanner est fixé de manière mobile au drone, de sorte que les mouvements involontaires du drone, par exemple dus aux rafales, puissent être compensés. Mais le drone peut aussi compenser lui-même de telles perturbations en pilotant ses moteurs.

Le déposant a cherché à améliorer son système en dotant les drones de son système d'inspection de moyens de détection et de mesure du relief. Un tel système de détection et de mesure des reliefs vise à pouvoir caractériser les défauts de surface détectés par le système d'inspection de surfaces des objets.

Dans tout le texte, on désigne par relief d'une surface, une variation de cette dernière selon un axe perpendiculaire au plan de la surface, soit en saillie (variation positive de la surface), soit en creux (variation négative de la surface).

Il existe un besoin de pouvoir détecter et mesurer les enfoncements (creux) ou les bosses (saillies) des défauts de surface détectés sur les objets inspectés, par exemple après un passage de grêles. En particulier, dans le cas de l'inspection d'un aéronef, la détection et la caractérisation automatique du relief d'impacts de grêles permet d'alerter les équipes de maintenance dès que la profondeur d'un impact est supérieure à une valeur prédéterminée.

Il existe également un besoin de pouvoir surveiller certaines zones spécifiques de l'aéronef, telles que les pourtours des portes d'accès à l'aéronef (accès passagers ou fret), du fait des chocs réguliers entre l'aéronef et les équipements aéroportuaires lors des opérations de chargement/déchargement des passagers et/ou du fret.

D'une manière générale, il existe un besoin de pouvoir détecter et mesurer automatiquement la profondeur des défauts de surface détectés par un robot d'inspection automatique de surfaces d'objets prédéterminés.

Il existe également un besoin de pouvoir détecter automatiquement un éventuel désalignement entre différents panneaux d'un aéronef de manière à limiter au maximum la consommation de carburant de l'aéronef. Par exemple, un défaut d'alignement d'un volet ou d'un aérofrein d'un aéronef par rapport à sa position nominale peut entrainer un surcoût de carburant de l'ordre de 10 000 USD par mois.

A ce jour, les solutions connues pour mesurer la profondeur d'une surface d'un objet prédéterminé, tel que par exemple un aéronef, se divisent en deux grandes familles que sont les solutions à contact, du type jauge de profondeur, et les solutions sans contact, du type scanner 3D.

Une jauge de profondeur comprend une embase fixe qui repose sur une surface de référence s'étendant autour de l'enfoncement dont on cherche à mesurer la profondeur et une partie mobile de contact placée au-dessus de l'enfoncement et configurée pour pouvoir être déplacée par un opérateur d'une position de repos à une position de contact avec la zone la plus profonde de l'enfoncement mesuré. L'écart de profondeur entre la surface de référence autour de l'enfoncement et la zone de contact avec la partie mobile détermine la profondeur de l'enfoncement. Cette mesure de profondeur est lue sur un cadran à aiguille ou un afficheur à cristaux liquides.

Cette solution présente l'avantage d'être facilement transportable mais nécessite un accès physique à l'enfoncement par l'opérateur pour mettre en place la jauge de profondeur. En outre, l'opération doit être renouvelée pour chaque enfoncement. Une telle opération est donc longue et éreintante lorsqu'il s'agit, par exemple, de déterminer les dégâts occasionnés par un épisode grêleux qui peut occasionner plus d'une centaine d'impacts. En outre, la précision d'une mesure par une jauge de profondeur dépend fortement du positionnement de la jauge, tant au niveau de son embase (surface de référence) qu'au niveau de la pointe de contact, qui doit idéalement être placée au-dessus de la zone de profondeur maximale de l'enfoncement. Cette zone de profondeur maximale est difficilement décelable à l'oeil nu de sorte qu'il est en pratique nécessaire de procéder à plusieurs mesures du même enfoncement en différents points pour disposer d'une mesure fiable de l'enfoncement.

Un scanner 3D ne nécessite plus de contact entre l'enfoncement et l'outil de détection. Ce dernier émet un signal lumineux qui est réfléchi par l'enfoncement et analysé par le scanner. Un tel outil permet donc des inspections plus rapides que les solutions à jauge de profondeur. En revanche, il impose toujours un accès physique par l'opérateur à l'enfoncement à mesurer. Un autre inconvénient, tant des scanners 3D que des jauges de profondeur, est qu'ils ne permettent pas d'associer la position du défaut à la mesure de l'enfoncement. En d'autres termes, il est nécessaire de pouvoir localiser le défaut en utilisant des mesures par rapports à d'autres points de repères dont la position est connue, ce qui complique le processus de caractérisation des enfoncements sur un objet de grande dimension tel qu'un aéronef.

Les inventeurs ont donc cherché à développer une nouvelle solution de mesure de la profondeur de zones d'intérêt d'une surface d'un objet de grande dimension tel qu'un aéronef, une éolienne, un bâtiment, un ouvrage d'art, etc.

## 3. Objectifs de l'invention

Ainsi, l'invention vise à fournir un dispositif de mesure du relief (enfoncement ou bosse) d'une surface d'un objet prédéterminé de grande dimension, tel qu'un aéronef, une éolienne, un navire, un ouvrage d'art, etc.

L'invention vise en particulier à fournir un dispositif de mesure du relief d'une surface qui ne nécessite pas une présence humaine au voisinage des zones inspectées de la surface.

L'invention vise également à fournir, dans au moins un mode de réalisation de l'invention, un dispositif de mesure qui peut faire l'acquisition d'une pluralité de mesures du relief d'une pluralité de zones d'intérêts d'une surface de manière rapide et répétable. L'objectif de l'invention est notamment de permettre l'acquisition de mesures tridimensionnelles d'une surface complète de l'objet, voire de l'objet dans son intégralité, auquel cas ladite pluralité de zones d'intérêts forme la surface complète de l'objet ou l'objet entier.

L'invention vise aussi à fournir, dans au moins un mode de réalisation, un tel dispositif qui permet de mesurer des reliefs avec une précision de l'ordre de 0,1 mm.

L'invention vise aussi à fournir, dans au moins un mode de réalisation, un tel dispositif qui permet de faire l'acquisition des mesures à une distance de 50 à 100 cm de la surface inspectée.

L'invention vise également à fournir, dans au moins un mode de réalisation de l'invention, un dispositif de mesure qui permet de fournir la position des reliefs mesurés par rapport à un repère lié à la surface inspectée.

L'invention vise enfin à fournir un procédé de commande d'un dispositif de mesure du relief.

## 4. Exposé de l'invention

Même si, par commodité, il est question d'invention dans ce qui suit, l'invention en tant que telle est définie par les caractéristiques des revendications.

Pour ce faire, l'invention concerne un engin volant motorisé de mesure du relief d'une pluralité de zones d'intérêts d'une surface d'un objet prédéterminé à inspecter, ledit engin volant comprenant un cadre porteur et des moyens motorisés de sustentation et de déplacement dudit cadre porteur.

Un engin volant selon l'invention, aussi désigné par la terminologie de drone ou de robot d'inspection dans toute la suite, est caractérisé en ce qu'il comprend en outre :

- un équipement de mesure tridimensionnelle d'une zone d'intérêt visé par ledit équipement, ledit équipement étant monté sur une nacelle reliée mécaniquement audit cadre porteur, et comprenant une source d'émission d'une onde, dite onde de référence, un récepteur matriciel d'une onde réfléchie par ladite zone d'intérêt visé par ledit équipement, et une unité de traitement configurée pour pouvoir déterminer une mesure du relief de ladite zone d'intérêt visée par ledit équipement à partir de l'analyse de ladite onde de référence et de ladite onde réfléchie,
- un système de pilotage automatique dudit engin configuré pour pouvoir passer ledit engin d'un mode, dit mode de navigation, dans lequel l'engin peut être déplacé d'une zone d'intérêt vers une zone d'intérêt subséquente par commande des moyens motorisés de sustentation et de déplacement, à un mode, dit mode stabilisé, dans lequel lesdits moyens motorisés de sustentation et de déplacement sont commandés pour pouvoir maintenir constant au moins un paramètre cinématique dudit engin permettant de minimiser les vibrations dudit engin et dans lequel ledit équipement de mesure peut faire l'acquisition d'une mesure tridimensionnelle de cette zone d'intérêt.

Un engin volant selon l'invention forme un dispositif de mesure du relief d'une pluralité de zones d'intérêts d'une surface qui ne nécessite pas de présence humaine au niveau des zones d'intérêts à inspecter. Cette pluralité de zones d'intérêts d'une surface d'un objet peut consister en une pluralité de zones distinctes non adjacentes de la surface d'un objet ou peut former une surface complète d'un objet ou l'objet dans son intégralité. Dans toute la suite, la notion de pluralité de zones d'intérêts est utilisée pour faire référence à un ensemble de zones à inspecter, ces zones pouvant être disjointes ou jointes pour former une surface complète et/ou un objet dans son intégralité.

Cette pluralité de zones d'intérêt est connue à l'avance. En d'autres termes, l'invention s'appuie sur une liste de zones d'intérêts fournie à l'engin. A partir de cette liste de zones d'intérêts, qui est par exemple fournie par un système d'inspection automatique de surface proposé par le déposant dans la demande de brevet WO2016/203151 qui permet de détecter automatiquement une liste de défauts sur une surface d'un objet prédéterminé, du type aéronef, éolienne, bâtiment, ouvrage d'art, etc., l'engin selon l'invention mesure automatiquement les reliefs de chacune de ces zones d'intérêt. Selon une autre variante, l'engin reçoit en temps réel la liste des zones d'intérêts à inspecter. Cette liste peut également être réduite à une seule zone de telle sorte que la mesure du relief peut être réalisée dès que le système d'inspection automatique décrit dans la demande susmentionnée détecte un défaut de surface. Les zones d'intérêts sont fournies à l'engin selon l'invention sous la forme d'une liste de zones permettant ainsi de définir une première zone d'intérêt, la zone d'intérêt subséquente, et ainsi de suite jusqu'à la dernière zone d'intérêt. Ce classement des zones peut être de tous types et est de préférence établie en fonction de la position des zones les unes par rapport aux autres pour minimiser le déplacement de l'engin d'une zone d'intérêt à la zone subséquente.

Un engin volant selon l'invention peut être déployé de manière beaucoup plus rapide que les dispositifs de mesure de l'art antérieur, du type jauge de profondeur ou scanner 3D.

En outre, un engin selon l'invention est entièrement automatique de sorte que le risque d'erreur est bien plus faible qu'avec les dispositifs de l'art antérieur nécessitant l'intervention d'un opérateur.

L'une des caractéristiques innovantes de l'invention est la présence d'un système de pilotage automatique configuré pour pouvoir passer l'engin volant d'un mode de navigation au cours duquel il peut être déplacé d'une zone d'intérêt dont il vient de faire une mesure tridimensionnelle vers une zone d'intérêt subséquente qui doit être mesurée, à un mode stabilisé au cours duquel l'acquisition de la mesure du relief de la nouvelle zone d'intérêt est réalisée concomitamment au maintien constant d'au moins un paramètre cinématique de l'engin pour minimiser les vibrations de l'engin. Cela permet de limiter au maximum les perturbations liées au fonctionnement des moteurs pendant l'acquisition de la mesure de la zone d'intérêt considérée.

Avantageusement et selon l'invention, au moins un paramètre cinématique de l'engin maintenu constant dans ledit mode stabilisé est choisi dans le groupe comprenant la position de l'engin, la vitesse de l'engin, l'accélération de l'engin, l'attitude de l'engin, et une fonction d'un ou plusieurs de ces paramètres.

Selon cette variante, la stabilité de l'engin permettant l'acquisition de mesure tridimensionnelle est obtenue par le maintien constant d'un ou plusieurs des paramètres cinématiques suivantes : position, vitesse, accélération, attitude. Cela permet de minimiser les mouvements de l'engin au voisinage de la zone d'intérêt à mesurer et d'acquérir des mesures précises de la profondeur de cette zone.

Avantageusement et selon l'invention, ledit système de pilotage automatique est configuré pour pouvoir, au voisinage de chaque zone d'intérêt, basculer du mode navigation au mode stabilisé lorsque ledit engin présente un état défini par au moins un paramètre cinématique de l'engin, voisin d'un état, dit état d'anticipation défini par au moins ce paramètre cinématique de l'engin, déterminé à partir d'un état, dit état d'acquisition, correspondant à une valeur cible de ce paramètre cinématique pour effectuer l'acquisition de cette zone d'intérêt et à une temporisation, dite temporisation d'anticipation, correspondant à la durée nécessaire pour garantir le maintien constant de ce paramètre par l'engin permettant l'acquisition d'une mesure tridimensionnelle de ladite zone d'intérêt par ledit équipement de mesure.

Selon cette variante avantageuse, l'engin est basculé en mode stabilisé au voisinage proche de la zone d'intérêt lorsque l'engin présente un état d'anticipation, caractérisé notamment par sa position, sa vitesse, son inclinaison, et/ou son accélération, etc., déterminé à partir de l'état de l'engin visé pour l'acquisition de la mesure de la zone d'intérêt. Cet état d'anticipation est par exemple atteint lorsque l'écart de vitesse et d'accélération entre l'état de l'engin et l'état d'acquisition est inférieur à un seuil prédéterminé. L'état de l'engin est déterminé par la lecture de capteurs liés à l'engin, tels que par exemple des télémètres laser et des capteurs inertiels. Cet état d'acquisition tient également compte d'une temporisation d'anticipation qui correspond à la durée nécessaire pour garantir le maintien constant du paramètre cinématique considéré pendant l'acquisition de la mesure tridimensionnelle par ledit équipement de mesure.

Ainsi, l'état d'anticipation est l'état de l'engin, défini par exemple par sa position, sa vitesse et son accélération, à partir duquel l'état d'acquisition est atteint par l'engin à l'expiration de la temporisation d'anticipation, compte tenu des consignes fournies aux moteurs de l'engin.

Avantageusement et selon l'invention, la nacelle comprend une articulation motorisée présentant au moins un axe de tangage de l'équipement de mesure par rapport audit cadre porteur, de manière à pouvoir positionner ledit équipement en regard d'une zone d'intérêt à mesurer.

Avantageusement et en combinaison, l'articulation présente en outre un axe de roulis de l'équipement de mesure par rapport au cadre porteur.

Cette variante avantageuse permet de pointer la nacelle, et donc l'équipement de mesure tridimensionnelle porté par la nacelle, dans toutes les directions de façon stable. Il est donc possible de procéder à l'acquisition de mesure de relief dans toutes les directions. En effet, le mouvement de roulis (rotation de l'équipement autour d'un axe longitudinal défini par la direction avant-arrière de l'engin, qui est en général la direction perpendiculaire à la direction principale de déplacement latéral de l'engin pour maintenir ce dernier à une distance constante de la surface qu'il inspecte) est obtenu par l'articulation motorisée de la nacelle ; le mouvement de tangage (rotation de l'équipement autour d'un axe transversal, qui est donc en général la direction de déplacement de l'engin) est obtenu par l'articulation motorisée de la nacelle ; et le mouvement de lacet (rotation horizontale de l'équipement autour d'un axe vertical défini par la gravité) est obtenu par le mouvement de lacet de l'engin lui-même.

Cette variante avantageuse permet également de maintenir l'équipement de mesure horizontal même lorsque l'engin volant ne l'est pas.

Avantageusement et selon cette variante, l'engin volant présente une direction principale d'avancement et ladite nacelle est montée à l'avant de l'engin volant défini suivant une direction perpendiculaire à cette direction principale d'avancement.

Cette variante avantageuse permet de rapprocher l'équipement de mesure tridimensionnelle de la surface à inspecter, et d'acquérir des mesures à la fois par le dessus d'une zone d'intérêt ou par le dessous d'une zone d'intérêt. En d'autres termes, un engin selon cette variante permet d'inspecter les surfaces en plaçant l'engin au-dessus d'une surface à inspecter, en dessous d'une surface à inspecter ou devant la surface à inspecter, ce qui offre de multiples possibilités en fonction de la surface et de l'encombrement avoisinant la surface à inspecter.

Selon une variante avantageuse, la nacelle est reliée au cadre porteur par des pièces d'amortissements de manière à pouvoir absorber les vibrations qui résultent d'une part du fonctionnement des moyens de sustentation et de déplacement de l'engin, et d'autre part des turbulences. Ces pièces d'amortissements sont par exemple des pièces en élastomères ou en gel de silicone.

Avantageusement et selon l'invention, l'engin comprend en outre au moins un capteur inertiel porté par ladite nacelle.

Un tel capteur inertiel comprend par exemple trois accéléromètres et trois gyroscopes. Il permet ainsi de déterminer l'orientation de la nacelle et donc l'orientation de l'équipement de mesure tridimensionnelle par rapport à la surface à inspecter. Ce capteur inertiel participe également à la commande de l'articulation motorisée de ladite nacelle pour suivre une consigne de positionnement de la nacelle prédéterminée.

Selon une variante de l'invention, l'engin peut également comprendre un deuxième capteur inertiel porté sur le cadre porteur permettant d'estimer l'état de l'engin.

Avantageusement et selon l'invention, l'engin comprend en outre au moins un télémètre laser solidaire dudit cadre porteur ou de ladite nacelle qui forme un capteur de positionnement relatif de l'engin volant par rapport à ladite surface de l'objet à inspecter.

Un engin selon cette variante permet donc d'estimer la position relative de l'engin, et donc de l'équipement de mesure tridimensionnelle, par rapport à la surface à inspecter. Ainsi, la combinaison des informations fournies par le télémètre laser et le ou les capteurs inertiels, permet de précisément connaitre la position et l'orientation de l'équipement par rapport aux zones d'intérêts de la surface à inspecter.

Cette connaissance de la position et de l'orientation de l'équipement de mesure, associée au système de pilotage automatique, permet d'acquérir des mesures précises et rapides des zones d'intérêts de la surface à inspecter.

Avantageusement et selon cette variante, l'engin comprend au moins deux télémètres laser configurés pour pouvoir balayer ladite surface à inspecter suivant au moins deux plans sécants.

Cette variante permet de disposer de mesures plus précises de la position relative de l'engin par rapport à la surface de l'objet à inspecter.

Avantageusement et selon l'invention, ledit système de pilotage automatique commande le passage en mode stabilisé dès que le(s) télémètre(s) laser détermine(nt) que l'engin est à une position prédéterminée par rapport à ladite zone d'intérêt.

Avantageusement et selon l'invention, l'engin comprend en outre un module de compensation des mesures tridimensionnelles acquises par ledit équipement de mesure adapté pour définir un profil de mouvement dudit engin au cours de ladite acquisition et corriger lesdites mesures en fonction de ce profil de mouvement.

Un tel module de compensation permet par exemple d'estimer la vitesse relative de l'engin par rapport à ladite surface de manière à pouvoir compenser les déplacements de l'engin volant lors du traitement desdites ondes reçues par le récepteur matriciel dudit équipement de mesure.

Cette variante avantageuse permet de tenir compte du profil de mouvement de l'engin lors de l'acquisition de manière à obtenir des mesures précises du relief.

Cette variante permet également de tenir compte de la vitesse de déplacement de l'engin et d'adapter la séquence de pilotage par le système de navigation en fonction de cette vitesse estimée. Cela permet notamment de faire l'acquisition des mesures de relief tout en maintenant l'engin volant en déplacement. Cette variante avantageuse permet également de compenser aussi bien la vitesse de translation que la vitesse angulaire dudit équipement de mesure.

Avantageusement et selon l'invention, l'engin comprend en outre un module d'accès à une modélisation tridimensionnelle de ladite surface dudit objet et un module de repérage de la position relative de l'engin par rapport à ladite modélisation tridimensionnelle de ladite surface dudit objet à inspecter, de manière à pouvoir associer à chaque zone d'intérêt visée par ledit équipement de mesure les coordonnées de la zone d'intérêt dans un repère de ladite modélisation tridimensionnelle de ladite surface.

Cette variante avantageuse permet de disposer d'une modélisation tridimensionnelle de la surface à inspecter. Cette modélisation tridimensionnelle est par exemple sauvegardée dans une mémoire embarquée sur l'engin ou récupérée depuis un serveur distant par un système de communication sans fil embarqué sur l'engin. Cette variante avantageuse permet de bénéficier d'une modélisation de la surface de l'objet qui est connue à l'avance. Cette modélisation 3D de la surface est par exemple formée par un maillage 3D polygonal de la surface. Cette variante avantageuse permet également de pouvoir déterminer la position de l'engin par rapport à la surface dont une modélisation 3D est connue. Cette détermination de la position de l'engin par rapport à la surface modélisée peut par exemple mettre en oeuvre le procédé de détermination de la position d'un engin mobile proposé par le déposant dans la demande de brevet WO2017/121936.

Cette variante avantageuse permet également de repérer précisément la position de chaque zone d'intérêt de la surface à inspecter.

Avantageusement et selon l'invention, l'engin comprend en outre un module de transmission sans fil des mesures de relief à une station sol.

Avantageusement et selon l'invention, l'engin comprend en outre un module de détermination d'une carte de profondeur comprenant un sous-module de détermination d'un relief de référence de ladite surface dudit objet inspecté à partir d'une modèle 3D prédéterminé de ladite surface de l'objet inspecté associé à un modèle mathématique prédéterminé, et un sous-module de calcul des écarts de profondeur entre lesdites mesures du relief desdites zones prédéterminées et ledit relief de référence.

Cette variante avantageuse permet de créer une carte de profondeur contenant les éventuels défauts détectés.

Avantageusement et selon l'invention, ledit équipement de mesure tridimensionnelle comprend une caméra d'émission d'une lumière structurée formant ladite source d'émission de ladite onde de référence et une caméra d'acquisition d'images de ladite zone d'intérêt illuminée par lumière structurée, formant ledit récepteur matriciel de ladite onde réfléchie.

Selon une autre variante avantageuse de l'invention, ledit équipement de mesure tridimensionnelle comprend un profilomètre laser formant ladite source d'émission de ladite onde de référence et une caméra d'acquisition d'image de ladite zone d'intérêt illuminée par ledit profilomètre laser, formant ledit récepteur matriciel de ladite onde réfléchie.

Selon une autre variante avantageuse de l'invention, ledit équipement de mesure tridimensionnelle comprend un flash lidar formant ladite source d'émission de ladite onde de référence et une caméra d'acquisition d'image de ladite zone d'intérêt illuminée par ledit flash lidar, formant ledit récepteur matriciel de ladite onde réfléchie.

Avantageusement et selon l'invention, lesdits moyens de sustentation et de déplacement dudit engin comprennent au moins quatre moteurs propulsifs. Un tel engin forme ainsi par exemple un drone multirotors avec quatre hélices, chacune étant entraînée par un moteur électrique. Il peut également s'agir d'un drone multirotors avec six ou huit hélices pour d'avantage de stabilité et de redondance.

Cette variante avantageuse permet notamment de conférer à l'engin une capacité de vol stationnaire, particulièrement utile au voisinage des zones d'intérêts lors de l'acquisition des mesures tridimensionnelles.

L'invention concerne également un procédé de commande d'un engin volant motorisé selon l'invention.

Un procédé selon l'invention est caractérisé en ce qu'il comprend les étapes consistant à :

- définir une liste de zones d'intérêts d'une surface d'un objet prédéterminé à inspecter,
- définir un profil de navigation de l'engin entre les différentes zones d'intérêts selon une chronologie prédéterminée,
- déplacer l'engin volant vers une première zone d'intérêt,
- régler la nacelle de l'engin pour pointer ladite zone à mesurer avec ledit équipement de mesure tridimensionnelle,
- au voisinage immédiat de la zone d'intérêt, passer l'engin en mode stabilisé et déclencher l'acquisition de la mesure tridimensionnelle de la zone d'intérêt,
- à la fin de l'acquisition, passer l'engin en mode navigation,
- déplacer l'engin volant vers la zone d'intérêt suivante du profil de navigation et répéter les opérations précédentes jusqu'à la dernière zone d'intérêt dudit profil de navigation.

Un procédé selon l'invention permet donc de mesurer de manière automatique les reliefs de la pluralité des zones d'intérêts. Le procédé selon l'invention adapte le mode de navigation en fonction de sa position par rapport aux zones d'intérêts. Le procédé selon l'invention permet notamment de déterminer la prochaine zone à inspecter, suivant le profil de navigation établi, et de déplacer l'engin jusqu'à cette zone d'intérêt. Le procédé permet également d'orienter la nacelle portant l'équipement d'acquisition. Le procédé permet ensuite de basculer l'engin en mode stabilisé dédié à l'acquisition des mesures tridimensionnelles pour limiter les perturbations liées aux moyens motorisés de sustentation et de déplacement. Le procédé permet enfin de rebasculer en mode navigation lorsque l'acquisition est terminée pour atteindre la zone d'intérêt suivante selon le profil de navigation établi.

L'invention concerne également un engin volant et un procédé de commande d'un tel engin volant caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique en perspective d'un engin volant selon un mode de réalisation de l'invention en cours d'acquisition d'une mesure tridimensionnelle,
- la figure 2 est une vue schématique en perspective d'un engin volant selon un mode de réalisation de l'invention,
- la figure 3 est une vue schématique en perspective d'un engin volant selon un autre mode de réalisation de l'invention,
- la figure 4 est une vue schématique en perspective d'une nacelle d'un engin selon un mode de réalisation de l'invention,
- la figure 5 est une vue schématique fonctionnelle d'un engin selon un mode de réalisation de l'invention.

## 6. Description détaillée d'un mode de réalisation de l'invention

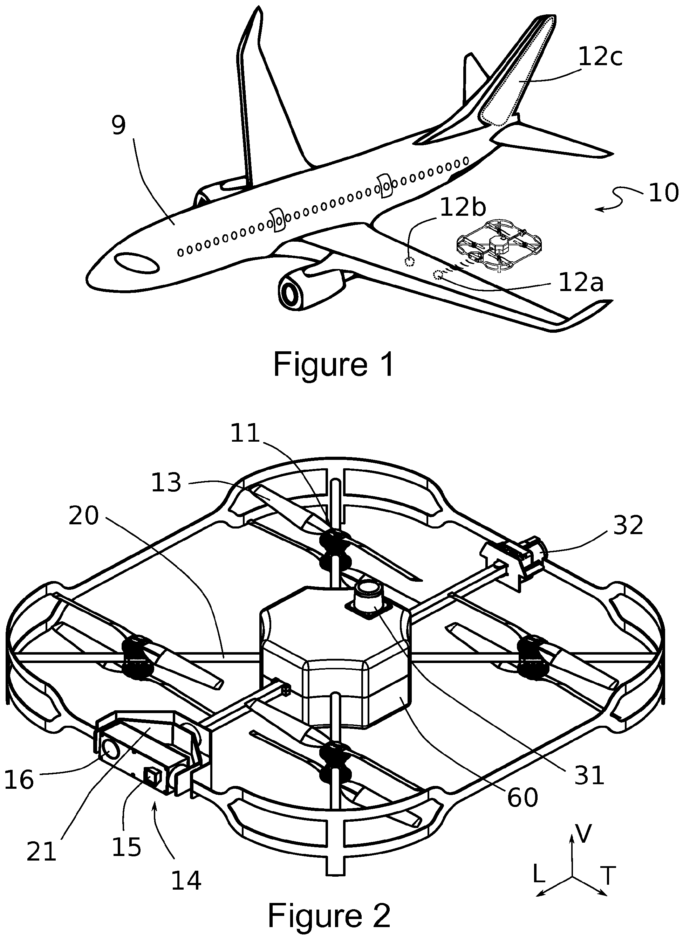

Sur les figures, les échelles et les proportions ne sont pas strictement respectées et ce, à des fins d'illustration et de clarté. Dans toute la description détaillée qui suit en référence aux figures, sauf indication contraire, chaque élément d'un engin volant selon l'invention est décrit tel qu'il est agencé lorsque l'engin est en cours d'utilisation, à l'horizontal, et se déplaçant selon une direction de déplacement, dite direction transversale. Cet agencement est représenté notamment sur la figure 2.

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 2. La direction longitudinale (L) correspond à la direction avant-arrière de l'engin, la direction transversale (T) correspond à la direction principale de déplacement de l'engin parallèlement à une surface d'un objet dont une mesure du relief d'une pluralité de zones d'intérêt est à effectuer et la direction verticale (V) est la direction définie par la gravité. En d'autres termes, la direction avant-arrière de l'engin est la direction longitudinale et la direction droite-gauche de l'engin est la direction transversale et correspond à la direction principale de déplacement de l'engin. En effet, un engin volant selon l'invention se déplace de préférence parallèlement à une surface à mesurer et les équipements de mesure sont de préférence agencés à l'avant de l'engin pour pouvoir pointer vers la surface à mesurer.

La figure 1 est une vue schématique d'un engin volant 10 selon un mode de réalisation de l'invention en cours d'utilisation sur un aéronef 9.

L'engin volant 10 se déplace par rapport à la surface de l'aéronef pour acquérir une pluralité de mesures tridimensionnelles d'une pluralité de zones d'intérêts de la surface de l'aéronef.

Cette pluralité de zones d'intérêt est par exemple une liste de zones fournie par un système d'inspection automatique de surface proposé par le déposant dans la demande de brevet WO2016/203151 qui permet de détecter automatiquement une liste de défauts sur une surface d'un objet prédéterminé. L'invention peut donc utiliser cette liste de défauts comme liste de zones d'intérêts pour déterminer le relief de chacun de ces défauts détectés. Selon une autre variante, la liste des zones d'intérêt est fournie à l'engin, par exemple, par le biais d'un fichier de positions à inspecter. Ces zones d'intérêt peuvent être de tous types (contour de portes, panneaux, impacts quelconques, etc.). Selon une autre variante la liste de zones d'intérêt est la surface entière de l'objet.

Sur la figure 1 et uniquement à des fins d'illustration, les zones d'intérêts dont une mesure du relief est recherchée sont référencées 12a, 12b et 12c. Sur la figure, les zones 12a, 12b sont des zones relativement limitées alors que la zone 12c est une zone étendue qui couvre l'ensemble de la surface latérale de la dérive verticale de l'aéronef 9.

La figure 2 illustre de manière plus détaillée l'engin volant 10. Ce dernier comprend un cadre porteur 20 sur lequel sont monté huit moteurs 11 de sustentation et de déplacement, chaque moteur étant associé à une hélice 13. Seule un moteur 11 et une hélice 13 sont référencés sur la figure 2 à des fins de clarté. Bien entendu, selon d'autres modes de réalisation, les moyens de sustentation et de déplacement de l'engin peuvent présenter d'autres architectures sans modifier l'objet de l'invention.

L'engin volant 10 comprend également un équipement 14 de mesure tridimensionnelle configurée pour permettre la mesure d'un relief de la surface visé par l'équipement.

Cet équipement est monté sur une nacelle 21 reliée mécaniquement au cadre porteur 20 à l'avant de l'engin défini par rapport à une direction longitudinale (L).

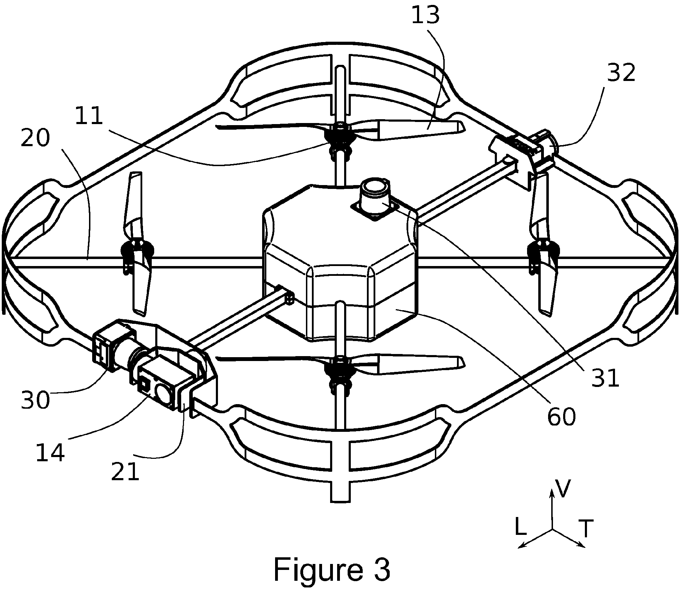

Sur les figures 2 et 3, la référence 60 représente un boitier mécanique logeant l'ensemble des organes de commande de l'engin (système de pilotage), des outils d'analyse des données issus des capteurs (télémètres, capteurs inertiels, etc.), des différents modules de traitement (module de compensation, module de création d'une carte de relief, etc.), et des moyens de calcul (processeur, mémoire, etc.), reliés à l'équipement de mesure 14 et aux moyens de sustentation et de déplacement 11 par des liaisons filaires ou des moyens de connection sans fil.

L'engin de la figure 2 comprend également deux télémètres laser 31, 32.

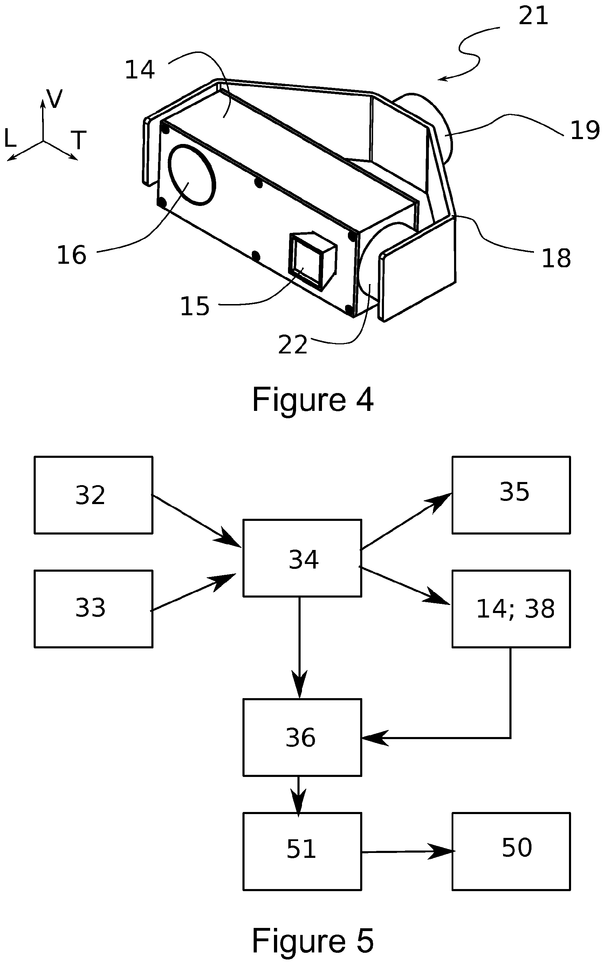

L'équipement 14 et la nacelle 21 sont représentés de manière plus détaillée sur la figure 4. Cette nacelle 21 comprend une armature en U 18 montée sur le cadre 20 de l'engin par l'intermédiaire d'une articulation 19 pivot motorisée permettant de faire pivoter l'armature en U 18 par rapport au cadre 20 autour d'un axe s'étendant le long de la direction longitudinale, telle que définie sur la figure 2.

L'équipement 14 est lui-même monté dans l'armature en U 18 par une articulation 22 pivot motorisée permettant de faire pivoter l'équipement par rapport à l'armature en U 18 autour d'un axe s'étendant le long de la direction transversale, telle que définie sur la figure 2.

Ainsi, l'équipement 14 peut être déplacé pour viser toutes les directions par le pilotage des articulations 19, 22 (ce qui permet de contrôler le roulis et le tangage de l'équipement) et par le contrôle du lacet de l'engin, qui définit alors le lacet de l'équipement. La motorisation des articulations 19 et 22 peut être de tous types et comprend de préférence des moteurs électriques.

L'équipement 14 comprend également une source d'émission 15 d'une onde de référence, et un récepteur 16 matriciel d'une onde réfléchie par la zone d'intérêt visée par l'équipement, et une unité de traitement 38, représentée schématiquement sur la figure 5, configurée pour pouvoir déterminer une mesure du relief de la zone d'intérêt visée par l'équipement 14 à partir de l'analyse de l'onde de référence et de l'onde réfléchie.

Selon un mode de réalisation, la source d'émission 15 est une caméra d'émission d'une lumière structurée et le récepteur matriciel 16 est une caméra d'acquisition d'images. Les ondes de référence et réfléchie sont donc des images. Selon ce mode de réalisation, la caméra d'émission 15 d'une lumière structurée peut être de tous types connus de sorte que la lumière structurée peut être une lumière avec un motif particulier (des lignes, des points, un quadrillage, etc.). La caméra d'acquisition d'images 16 fait ensuite l'acquisition d'images des différents motifs projetés sur la zone d'intérêt. L'unité de traitement 38 permet ensuite de déterminer la déformation du motif. L'analyse de la déformation du motif permet d'estimer la profondeur de la surface sur laquelle la lumière structurée est projetée. Différentes solutions techniques et logicielles sont disponibles sur le marché pour estimer la profondeur à partir d'images acquises de la projection de la lumière structurée et ne sont pas décrites ici en détail.

Selon un autre mode de réalisation, la source d'émission 15 est un profilomètre laser et le récepteur matriciel 16 est une caméra d'acquisition d'image de la zone d'intérêt illuminée par le profilomètre laser. Selon ce mode de réalisation, un profilomètre laser projette une ligne sur la zone d'intérêt et la caméra d'acquisition fait l'acquisition d'une image de la ligne projetée sur la zone d'intérêt. L'unité de traitement 38 peut alors déterminer la profondeur de la zone d'intérêt suivant cette ligne projetée. Différentes solutions techniques et logicielles sont disponibles sur le marché pour estimer la profondeur à partir d'un profilomètre laser et ne sont pas décrites ici en détail.

Selon un autre mode de réalisation, la source d'émission 15 est un flash lidar et le récepteur matriciel 16 est une caméra d'acquisition d'image de la zone d'intérêt illuminée par le flash lidar. Selon ce mode de réalisation, l'onde de référence est un signal laser multidirectionnel émis par un flash lidar. Le récepteur matriciel fait l'acquisition de l'onde réfléchie par la zone d'intérêt visée par l'onde émise et l'unité de traitement 38 détermine la profondeur par l'analyse comparative de l'onde émise et l'onde réfléchie (typiquement par la mesure du temps de vol ou par la mesure du déphasage). Un engin volant selon ce mode de réalisation est représenté schématiquement sur la figure 3. En outre, cet engin comprend trois télémètres laser 30, 31, 32 dont un télémètre 30 agencé au voisinage de l'équipement de mesure.

Bien entendu, le nombre de télémètres laser n'est pas conditionné au type d'équipement de mesure utilisé. Ainsi, rien n'empêche de prévoir d'utiliser un équipement de mesure du type flash lidar tel que représenté sur la figure 3 avec deux télémètres laser ou d'utiliser un équipement de mesure du type lumière structurée tel que représenté sur la figure 2 avec trois télémètres laser.

L'engin volant comprend en outre un système de pilotage automatique configuré pour pouvoir passer l'engin d'un mode, dit mode de navigation, dans lequel l'engin peut être déplacé d'une zone d'intérêt vers une zone d'intérêt subséquente par commande des moteurs 11, à un mode, dit mode stabilisé, dans lequel les moteurs 11 sont commandés pour pouvoir maintenir constant au moins un paramètre cinématique de l'engin (par exemple la position de l'engin, la vitesse de l'engin, l'accélération de l'engin, l'attitude de l'engin ou une combinaison de ces différents paramètres), permettant de minimiser les vibrations de l'engin pour pouvoir activer l'équipement 14 et procéder à l'acquisition d'une mesure tridimensionnelle de la zone d'intérêt. Comme indiqué précédemment, ce système de pilotage est par exemple logé dans le boitier 60 central de l'engin et en intéraction avec les capteurs de l'engin (télémètres laser et capteur interiel) et les moteurs 11.

Pour ce faire, le système de pilotage automatique est de préférence configuré pour pouvoir, au voisinage de chaque zone d'intérêt, basculer du mode navigation au mode stabilisé lorsque l'engin présente un état voisin d'un état d'anticipation défini par rapport à un état d'acquisition.

Le principe du basculement de mode mis en oeuvre par le système de pilotage est le suivant.

On désigne par « état de l'engin », les caractéristiques cinématiques de l'engin, telles que la position de l'engin, les vitesses de l'engin (angulaire et/ou de translation), les orientations de l'équipement de mesure, les accélérations de l'engin, etc. Cet état est déterminé par exemple par des capteurs lasers, des capteurs inertiels et par un module de localisation de l'engin. Ce module de localisation peut être de tous types et est par exemple celui décrit dans la demande de brevet WO2017/121936 au nom du demandeur.

On désigne par « état d'acquisition », l'état visé par l'engin pour réaliser l'acquisition de la zone d'intérêt considérée. Cet état d'acquisition est déterminé par exemple par une position, une vitesse et une orientation de l'équipement d'acquisition.

On désigne par « loi de navigation », la loi qui permet, à partir d'un état mesuré et d'une trajectoire donnée, de calculer l'accélération nécessaire, selon les 3 axes, pour suivre la trajectoire donnée. L'accélération nécessaire calculée est par nature évolutive étant donné que l'état de l'engin change à chaque instant.

On désigne par « loi de commande », la loi qui permet, à partir d'un état mesuré et d'une consigne d'accélération, de calculer les commandes des moteurs nécessaires pour atteindre l'accélération visée. Typiquement, l'accélération en entrée de la loi de commande est celle calculée par la loi de navigation. Par exemple, si une accélération latérale est sollicitée, la loi de commande va permettre de diminuer la vitesse des moteurs du côté correspond pour incliner l'engin. La sortie (la vitesse de rotation des moteurs) varie d'autant plus que l'entrée (l'accélération commandée) varie. Aussi, en loi de navigation, vu que l'accélération commandée est sans cesse en train de varier, il en va de même pour la commande des actionneurs (les moteurs).

On désigne par « loi d'acquisition », la loi qui permet, à partir de l'état de l'engin et de l'état d'acquisition, de calculer le paramètre cinématique constant (en pratique l'accélération) susceptible de mener à des conditions idéales d'acquisitions.

On note Sc, l'état de l'engin visé pour une acquisition et caractérisé par la position souhaitée Pc, et la vitesse souhaitée Vc. L'objectif est d'approcher l'état de l'engin le plus possible de cet état tout en ayant une accélération constante au moment où il en sera le plus proche.

On note Sm, l'état mesuré de l'engin à un instant donné caractérisé par la position Pm et la vitesse Vm à cet instant donné.

On définit $\Delta$Tanticipation le temps d'anticipation du mode stabilisé sur l'acquisition, par exemple $\Delta$Tanticipation = 1s.

Le processus de pilotage est alors le suivant :

- Etape 1 : le système de pilotage sélectionne le prochain état d'acquisition Sc. Il calcule alors un état d'anticipation Sa, caractérisé par une position d'anticipation Pa et une vitesse d'anticipation Va, de cet état d'acquisition en considérant une accélération nulle pendant $\Delta$Tanticipation entre Sa et Sc. Ainsi, on a tout simplement Va = Vc et Pa = Pc - $\Delta$Tanticipation * Vc. Le système de pilotage calcule alors une trajectoire jusqu'à l'état d'anticipation Sa.

- Etape 2 : la loi de navigation calcule et met à jour en permanence une accélération commandée permettant de suivre la trajectoire jusqu'à l'état d'anticipation Sa. Cette accélération qui varie régulièrement au gré des virages, perturbations et incertitudes de mesures est transmise à la loi de commande qui commande les actionneurs en fonction et l'engin suit donc la trajectoire imposée.

- Etape 3 : Lorsque l'état de l'engin mesuré Sm est suffisamment proche de l'état d'anticipation Sa (défini par exemple par un seuil d'écart en vitesses et accélérations), la loi d'acquisition calcule l'accélération constante AccelAcquisition qui permettrait de passer au plus proche de l'état d'acquisition Sc en partant de l'état mesuré Sm, ainsi que la durée temporelle au bout de laquelle on en serait le plus proche : $\Delta$Tdéclenchement. Le $\Delta$Tdéclenchement est par construction très proche de $\Delta$Tanticipation mais peut varier légèrement pour compenser la différence entre Sm et Sa au moment du calcul. De même, l'accélération calculée AccelAcquisition est proche de zéro, mais elle n'est pas nulle pour compenser la différence entre Sm et Sa. Dit autrement, le fait de recalculer $\Delta$Tdéclenchement et AccelAcquisition plutôt que d'utiliser les valeurs théoriques permet de figer une accélération tout en compensant les écarts entre Sm et Sa (imprécision de navigation, mesure, perturbations, etc.). Le système de pilotage utilise alors l'accélération AccelAcquisition pour la loi de commande. La loi de commande ayant pour entrée une accélération constante, l'attitude (ou assiette ou inclinaison) ainsi que la poussée moyenne de l'engin ne varie plus et les variations des commandes moteurs sont faibles. L'engin est alors en « roue libre ». L'instant de commutation Tc est enregistré.

- Etape 4 : A l'instant Tc + $\Delta$TDéclenchement l'acquisition est commandée. L'engin reste en mode stabilisé et attitude constante la durée de l'acquisition $\Delta$TAcquisition. A l'instant Tc + $\Delta$TDéclenchement + $\Delta$TAcquisition l'acquisition est terminée. Si l'acquisition s'est bien déroulée, la liste d'états acquisition est mise à jour en fonction. Pendant toute la durée de cette étape, si l'engin s'éloigne trop de la trajectoire théorique il repasse immédiatement à l'étape 1 pour des raisons de sécurité.

Ces différentes étapes mises en oeuvre par le système de pilotage recourent de préférence à des moyens logiciels embarqués sur un composant de l'engin volant. D'une manière générale, le système peut comprendre des moyens logiciels et/ou matériels pour mettre en oeuvre les différentes étapes du système de pilotage.

Selon un mode de réalisation préférentiel, l'engin volant comprend en outre un module 36 de compensation des mesures tridimensionnelles acquises par l'équipement de mesure 14 adapté pour définir un profil de mouvement de l'engin au cours de l'acquisition et corriger les mesures en fonction de ce profil de mouvement.

Dans tout le texte, le terme module désigne un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Ainsi, un module peut être implémenté sous forme de programme d'ordinateur exécuté par un ou plusieurs composants électroniques, par exemple un processeur d'un ordinateur, microcontrôleur, DSP (Digital Signal Processor en anglais), FPGA (Field-Programmable Gate Array en anglais), etc. D'une manière générale, un module est donc un élément (logiciel et/ou matériel) qui permet d'assurer une fonction.

Le processus de compensation des mesures mis en oeuvre par le module de compensation est par exemple le suivant :

- Etape 1 : les données brutes des différents capteurs (équipements de mesures, capteurs inertiels, etc.) sont sauvegardées et horodatées,
- Etape 2 : les données de position, vitesse et accélérations sont synchronisées avec ces données brutes,
- Etape 3 : un profil de mouvement pendant l'acquisition est créé à partir des données de position, vitesse et accélérations. Ce profil de mouvement peut par exemple être déterminé en en considérant que la durée d'acquisition est relativement courte et l'accélération de l'engin constante. Ainsi, un moyen de calculer ce profil de mouvement est d'utiliser un modèle à accélération constante pour la partie translation et vitesse angulaire constante pour la partie rotation. Un tel modèle mathématique peut par exemple s'écrire, sur la durée de l'acquisition :

$$P(t) = \frac{1}{2} * A0 * t^2 + V0 * t + P0$$

$$\Omega(t) = \Omega0 + t * \omega0$$

A partir des données acquises, il est possible de trouver A0, V0, P0, $\Omega0$ et $\omega0$ tel que le modèle soit le plus proche des données de position et inertiels acquises. De nombreuses méthodes d'optimisation existent pour résoudre ce problème numérique. Une fois les constantes déterminées, les équations ci-dessus permettent d'avoir une bonne estimation de la position et orientation du capteur à chaque instant temporel de l'acquisition.

D'autres type de modèles mathématiques peuvent être utilisés, par exemple en figeant la vitesse, ou en autorisation des variations de l'accélération, etc. Il est également possible de filtrer les données pour créer un profil sans forme particulière. Différents filtres numériques peuvent être utilisés, comme un filtre passe-bas, un filtre complémentaire, etc.

- Etape 4 : chaque donnée brute d'acquisition est corrigée en fonction du profil de mouvement ainsi déterminé.

Une fois que cette compensation des mesures est réalisée, une étape subséquente de fusion des données et de création d'une carte de profondeur peut être mise en oeuvre par un module ad-hoc, incluant les éventuels filtrages et rejections de bruit peut être mise en oeuvre (soit à bord de l'engin, soit après rapatriement des données au sol). Une étape subséquente de caractérisation et de segmentation des mesures peut également être mise en oeuvre par un module ad-hoc (soit à bord de l'engin, soit au sol après rapatriement des données au sol). Différentes méthodes disponibles dans la littérature permettent de faire de tels segmentations de données.

Par exemple, ces différentes étapes peuvent être réalisées de la manière suivante par un ou plusieurs modules :

- Etape 1 : Détermination d'un relief de référence pour la surface. L'objectif de cette étape est de définir un relief de référence pour la surface qui a été mesurée afin de comparer la mesure à la référence. Le relief de référence peut être directement extrait d'un modèle 3D de la surface, être estimé par un modèle mathématique, ou une combinaison des deux techniques.

  Par exemple, s'il est extrait du modèle 3D, la surface de référence peut être un plan ou une portion de cylindre à une position donnée de la mesure.
  S'il s'agit d'un modèle mathématique, la surface de référence peut être un plan, une portion de cylindre ou encore une forme paramétrique générale dont les coefficients et la position sont calculés pour être au plus proche du relief mesurée. Avantageusement, le relief de référence est calculé par une combinaison des deux techniques : le modèle 3D de référence indique le type et les principaux paramètres de la forme paramétrique de référence (par exemple, une portion cylindrique de rayon donné) et la position de la forme paramétrique de référence est estimée par le modèle mathématique.

- Etape 2 : Calcul des écarts entre le relief mesuré et le relief de référence. Cette étape permet de calculer, en chaque point de la surface mesurée, la position ou variation de la surface par rapport à la référence : des valeurs positives vont indiquer des saillies de matière et des valeurs négatives des creux. Cette étape permet de créer une carte de profondeur contenant les éventuels défauts. Avantageusement, cette étape contient en outre une étape de filtrage, par exemple de type gaussien ou médian, pour réduire le bruit de mesure et obtenir une carte de profondeur plus simple à exploiter.

- Etape 3 : Localisation des extremums locaux sur la carte de profondeur. L'objectif de cette étape est de recenser toutes les zones ou la variation de surface en valeur absolue est supérieure à un certain seuil ; par exemple 0.5mm. En effet, ces zones sont a priori des défauts structurels.

- Etape 4 : Caractérisation de chaque extremum local. Pour chacune des zones trouvées à l'étape 3, l'objectif est de calculer plusieurs grandeurs permettant de caractériser simplement le défaut. Typiquement, les valeurs suivantes seront calculées :

- Profondeur ou saillie maximale,
- Surface du défaut,
- Pente maximale du défaut.

Suivant l'application, d'autres grandeurs peuvent également être calculées, et l'ensemble des grandeurs utilisées permettent de fournir une caractérisation textuelle du défaut.

L'exécution de l'ensemble des étapes 1 à 4 pour chaque acquisition permet de constituer une liste de défauts caractérisés par une carte de profondeur, des grandeurs représentatives et une indication textuelle.

Avantageusement, des statistiques globales peuvent également être générées, et des indications supplémentaires calculées à partir de la connaissance de l'ensemble des défauts. Par exemple, la densité de défauts peut être calculée par zone, et pour chaque défaut sa distance au plus proche des autres défauts. Ces données peuvent être utiles pour mieux évaluer l'acceptabilité ou non de certains dommages. Enfin, le système peut être programmé pour donner automatiquement une indication sur la suite à effectuer, telle qu'une réparation ou une surveillance, en fonction de règles préprogrammées. Ces règles préprogrammées peuvent par exemple être intégrées au modèle 3D et ainsi dépendre de la localisation des défauts.

La figure 5 est un schéma fonctionnel des différents moyens mis en oeuvre par l'engin volant motorisé de mesure du relief d'une pluralité de zones d'intérêts d'une surface d'un objet prédéterminé à inspecter selon un mode préférentiel de l'invention.

Un tel engin comprend au moins un télémètre laser 32 et au moins un système inertiel 33. Un tel système inertiel 33 comprend par exemple trois accéléromètres et trois gyroscopes. Le télémètre laser 32 et le système inertiel 33 sont montés sur le cadre 20 de l'engin ou directement sur la nacelle 21.

Les données issues de ces deux instruments alimentent un module de calcul 34 de la position de l'engin mobile et de commande de l'équipement de mesure tridimensionnelle 14.

Ce module 34 pilote la mise en oeuvre de la loi de commande 35 décrite ci-dessus en lien avec le système de pilotage.

Le module de calcul 34 et la loi de commande 35 forment le système de pilotage.

Une fois les mesures tridimensionnelles acquises par l'équipement de mesure 14, le module 36 de compensation corrige les mesures à partir du profil de mouvement déterminé par le processus décrit ci-dessus.

Selon un mode de réalisation non représenté sur les figures, l'engin comprend en outre un module d'accès à une modélisation tridimensionnelle de la surface de l'aéronef 9 et un module de repérage de la position relative de l'engin 20 par rapport à cette modélisation tridimensionnelle de la surface de l'aéronef à inspecter, de manière à pouvoir associer à chaque zone d'intérêt (12a, 12b, 12c) visée par l'équipement (14) de mesure les coordonnées de la zone d'intérêt dans un repère de la modélisation tridimensionnelle de la surface. Cette modélisation 3D est par exemple une modélisation polygonale de la surface de l'objet. Le module de repérage de la position de l'engin par rapport à cette modélisation 3D peut être de tous types. Il peut par exemple s'agir d'un module mettant en oeuvre les principes décrits dans la demande de brevet WO2017/121936 au nom du demandeur.

Les données corrigées peuvent ensuite être transmises vers une station sol 50 par l'intermédiaire d'un système de communication 51. Cette transmission des données corrigées vers une station sol 50 est par exemple une transmission sans fil, qui peut être de tous types.

## Revendications

1. Engin volant (10) motorisé de mesure du relief d'une pluralité de zones d'intérêts (12a, 12b, 12c) d'une surface d'un objet (9) prédéterminé à inspecter, ledit engin volant comprenant :

   - un cadre (20) porteur,
   - des moyens motorisés (11, 13) de sustentation et de déplacement dudit cadre (20) porteur,
   - un équipement (14) de mesure tridimensionnelle d'une zone d'intérêt (12a, 12b, 12c) visée par ledit équipement (14) monté sur une nacelle (21) reliée mécaniquement audit cadre (20) porteur, ledit équipement (14) comprenant une source d'émission d'une onde (15), dite onde de référence, un récepteur matriciel (16) d'une onde réfléchie par ladite zone d'intérêt (12a, 12b, 12c) visée par ledit équipement (14), et une unité de traitement (38) configurée pour pouvoir déterminer une mesure du relief de ladite zone d'intérêt (12a, 12b, 12c) visée par ledit équipement (14) à partir de l'analyse de ladite onde de référence et de ladite onde réfléchie,
   - un système de pilotage (34, 35) automatique dudit engin configuré pour pouvoir passer ledit engin d'un mode, dit mode de navigation, dans lequel l'engin peut être déplacé d'une zone d'intérêt (12a, 12b, 12c) vers une zone d'intérêt subséquente (12a, 12b, 12c) par commande des moyens motorisés (11, 13) de sustentation et de déplacement, à un mode, dit mode stabilisé, dans lequel lesdits moyens motorisés (11, 13) de sustentation et de déplacement sont commandés pour pouvoir maintenir constant au moins un paramètre cinématique dudit engin, choisi dans le groupe comprenant la vitesse de l'engin, l'accélération de l'engin, l'attitude de l'engin et une fonction d'un ou plusieurs de ces paramètres, permettant de minimiser les vibrations dudit engin et dans lequel ledit équipement (14) de mesure peut faire l'acquisition d'une mesure tridimensionnelle d'une zone d'intérêt (12a, 12b, 12c),

**caractérisé en ce que**
ledit système de pilotage (34, 35) automatique étant en outre configuré pour pouvoir, au voisinage de chaque zone d'intérêt, basculer du mode navigation au mode stabilisé lorsque ledit engin présente un état défini par au moins un paramètre cinématique de l'engin, voisin d'un état, dit état d'anticipation défini par au moins ce paramètre cinématique de l'engin, déterminé à partir d'un état, dit état d'acquisition, correspondant à une valeur cible de ce paramètre cinématique pour effectuer l'acquisition de cette zone d'intérêt et à une temporisation, dite temporisation d'anticipation, correspondant à la durée nécessaire pour garantir le maintien constant de ce paramètre par l'engin permettant l'acquisition d'une mesure tridimensionnelle de ladite zone d'intérêt (12a, 12b, 12c) par ledit équipement (14) de mesure.

2. Engin selon la revendication 1, **caractérisé en ce que** ladite nacelle (21) comprend une articulation (22) motorisée présentant au moins un axe de tangage de l'équipement (14) de mesure par rapport audit cadre porteur (20) de manière à pouvoir positionner ledit équipement (14) en regard d'une zone d'intérêt (12a, 12b, 12c) à mesurer.

3. Engin selon l'une des revendications 1 ou 2, **caractérisé en ce qu'**il comprend en outre au moins un télémètre laser (30, 31, 32) solidaire dudit cadre porteur (20) ou de ladite nacelle (21) qui forme un capteur de positionnement relatif de l'engin volant par rapport à ladite surface de l'objet à inspecter.

4. Engin selon la revendication 3, **caractérisé en ce que** ledit système de pilotage (34, 35) automatique est configuré pour pouvoir commander le passage en mode stabilisé dès que le(s) télémètre(s) laser (30, 31, 32) détermine(nt) que l'engin est à une position prédéterminée de ladite zone d'intérêt (12a, 12b, 12c).

5. Engin selon l'une des revendications 1 à 4, **caractérisé en ce qu'**il comprend en outre un module de compensation (36) des mesures tridimensionnelles acquises par ledit équipement (14) adapté pour définir un profil de mouvement dudit engin au cours de ladite acquisition et corriger lesdites mesures en fonction de ce profil de mouvement.

6. Engin selon l'une des revendications 1 à 5, **carac-**

**térisé en ce qu'**il comprend en outre un module d'accès à une modélisation tridimensionnelle de ladite surface dudit objet et un module de repérage de la position relative de l'engin par rapport à ladite modélisation tridimensionnelle de ladite surface dudit objet à inspecter, de manière à pouvoir associer à chaque zone d'intérêt (12a, 12b, 12c) visée par ledit équipement (14) de mesure les coordonnées de la zone d'intérêt dans un repère de ladite modélisation tridimensionnelle de ladite surface.

7. Engin selon l'une des revendications 1 à 6, **caractérisé en ce qu'**il comprend en outre un module de transmission (51) sans fil des mesures de relief à une station sol (50).

8. Engin selon l'une des revendications 1 à 7, **caractérisé en ce qu'**il comprend en outre un module de détermination d'une carte de profondeur comprenant un sous-module de détermination d'un relief de référence de ladite surface dudit objet inspecté à partir d'une modèle 3D prédéterminé de ladite surface de l'objet inspecté associé à un modèle mathématique prédéterminé, et un sous-module de calcul des écarts de profondeur entre lesdites mesures du relief desdites zones prédéterminées et ledit relief de référence.

9. Engin selon l'une des revendications 1 à 8, **caractérisé en ce que** ledit équipement (14) de mesure tridimensionnelle comprend une caméra d'émission d'une lumière structurée formant ladite source d'émission (15) de ladite onde de référence et une caméra d'acquisition d'images de ladite zone d'intérêt illuminée par lumière structurée, formant ledit récepteur matriciel (16) de ladite onde réfléchie.

10. Engin selon l'une des revendications 1 à 8, **caractérisé en ce que** ledit équipement (14) de mesure tridimensionnelle comprend un profilomètre laser formant ladite source d'émission (15) de ladite onde de référence et une caméra d'acquisition d'image de ladite zone d'intérêt illuminée par ledit profilomètre laser, formant ledit récepteur matriciel (16) de ladite onde réfléchie.

11. Engin selon l'une des revendications 1 à 8 **caractérisé en ce que** ledit équipement (14) de mesure tridimensionnelle comprend un flash lidar formant ladite source d'émission (15) de ladite onde de référence et une caméra d'acquisition d'image de ladite zone d'intérêt illuminée par ledit flash lidar, formant ledit récepteur matriciel (16) de ladite onde réfléchie.

12. Engin selon l'une des revendications 1 à 11, **caractérisé en ce que** lesdits moyens motorisés (11, 13) de sustentation et de déplacement dudit engin comprennent au moins quatre moteurs propulsifs.

**13.** Procédé de commande d'un engin volant (10) motorisé selon l'une des revendications 1 à 12, **caractérisé en ce qu'**il comprend les étapes consistant à :

- définir une liste de zones d'intérêts (12a, 12b, 12c) d'une surface d'un objet prédéterminé à inspecter,
- définir un profil de navigation de l'engin entre les différentes zones d'intérêts (12a, 12b, 12c) selon une chronologie prédéterminée,
- déplacer l'engin volant (20) vers une première zone d'intérêt,
- régler la nacelle (21) de l'engin pour pointer ladite zone à mesurer avec ledit équipement (14) de mesure tridimensionnelle,
- au voisinage immédiat de la zone d'intérêt, passer l'engin en mode stabilisé et déclencher l'acquisition de la mesure tridimensionnelle de la zone d'intérêt,
- à la fin de l'acquisition, passer l'engin en mode navigation,
- déplacer l'engin volant vers la zone d'intérêt suivante du profil de navigation et répéter les opérations précédentes jusqu'à la dernière zone d'intérêt dudit profil de navigation.

**Patentansprüche**

**1.** Motorisiertes Fluggerät (10) zum Messen der Kontur mehrerer Bereiche von Interesse (12a, 12b, 12c) einer Oberfläche eines bestimmten, zu untersuchenden Objekts (9), worin das Fluggerät umfasst:

- einen Tragrahmen (20),
- motorisierte Mittel (11, 13) zum Anheben und Bewegen des Tragrahmens (20),
- eine Vorrichtung (14) zur dreidimensionalen Erfassung eines Bereichs von Interesse (12a, 12b, 12c), auf den die Vorrichtung (14) gerichtet ist, worin die Vorrichtung auf einer Gondel (21) montiert ist, die mechanisch mit dem Tragrahmen (20) verbunden ist, worin die Vorrichtung (14) eine Wellenemissionsquelle (15), worin die Welle als Referenzwelle bezeichnet wird, einen Matrixempfänger (16) einer Welle, die von dem Bereich von Interesse (12a, 12b, 12c), auf den die Vorrichtung (14) gerichtet ist, reflektiert wird, und eine Verarbeitungseinheit (38) umfasst, die ausgestaltet ist, in der Lage zu sein, eine Erfassung der Kontur des Bereiches von Interesse (12a, 12b, 12c), auf den die Vorrichtung (14) gerichtet ist, anhand der Analyse der Referenzwelle und der reflektierten Welle zu bestimmen,
- ein automatisches Steuerungssystem (34, 35) des Fluggeräts, das ausgestaltet ist, das Fluggerät von einem als Navigationsmodus bezeichneten Modus, in dem das Fluggerät von einem Bereich von Interesse (12a, 12b, 12c) zu einem nachfolgenden Bereich von Interesse (12a, 12b, 12c) bewegt werden kann, indem motorisierte Hebe- und Bewegungsmittel (11, 13) gesteuert werden, in einen als stabilisierten Modus bezeichneten Modus umzuschalten, in dem die motorisierten Hebebewegungsmittel (11, 13) so gesteuert werden, dass diese in der Lage sind, mindestens einen kinematischen Parameter des Fluggeräts konstant zu halten, ausgewählt aus der Gruppe bestehend aus der Geschwindigkeit des Fluggeräts, der Beschleunigung des Fluggeräts, der Lage des Fluggeräts und einer Funktion eines oder mehrerer dieser Parameter, wodurch es möglich ist, die Vibrationen des Fluggeräts zu minimieren, und in dem die Erfassungsvorrichtung (14) eine dreidimensionale Erfassung eines Bereiches von Interesse (12a, 12b, 12c) erfassen kann,

**dadurch gekennzeichnet, dass** das automatische Steuerungssystem (34, 35) ausgestaltet ist, in der Nähe jedes Bereiches von Interesse vom Navigationsmodus in den stabilisierten Modus umzuschalten, wenn sich das Fluggerät in einem Zustand befindet, der durch mindestens einen kinematischen Parameter des Fluggeräts definiert ist und an einen Zustand angrenzt, der als Erwartungszustand bezeichnet wird, der durch mindestens diesen kinematischen Parameter des Fluggeräts definiert ist, und der ausgehend von einem als Aufnahmezustand bezeichneten Zustand, der einem Zielwert dieses kinematischen Parameters für die Durchführung der Aufnahme dieses Bereiches von Interesse entspricht, und einer als Antizipationszeitverzögerung bezeichneten Zeitverzögerung bestimmt wird, die der Zeit entspricht, die erforderlich ist, um zu gewährleisten, dass dieser Parameter durch das Fluggerät konstant gehalten wird, wodurch die Aufnahme einer dreidimensionalen Erfassung des Bereiches von Interesse (12a, 12b, 12c) durch die Erfassungsvorrichtung (14) ermöglicht wird.

**2.** Fluggerät nach Anspruch 1, **dadurch gekennzeichnet, dass** die Gondel (21) ein motorisiertes Gelenk (22) umfasst, das mindestens eine Neigungsachse der Erfassungsvorrichtung (14) in Bezug auf den Tragrahmen (20) aufweist, um die Vorrichtung (14) gegenüber einem zu messenden Bereich von Interesse (12a, 12b, 12c) positionieren zu können.

**3.** Fluggerät nach einem der Ansprüche 1 oder 2, **dadurch gekennzeichnet, dass** es ferner mindestens einen Laserentfernungsmesser (30, 31, 32) umfasst, der starr mit dem Tragrahmen (20) oder der Gondel (21) verbunden ist und der einen Sensor für die relative Position des Fluggeräts in Bezug auf die Oberfläche des zu inspizierenden Objekts bildet.

**4.** Fluggerät nach Anspruch 3, **dadurch gekennzeichnet, dass** das automatische Steuerungssystem (34, 35) ausgestaltet ist, den Wechsel in den stabilisierten Modus zu steuern, sobald der/die Laserentfernungsmesser (30, 31, 32) feststellt/feststellen, dass sich das Fluggerät an einer bestimmten Position des Bereiches von Interesse (12a, 12b, 12c) befindet.

**5.** Fluggerät nach einem der Ansprüche 1 bis 4, **dadurch gekennzeichnet, dass** es ferner ein Modul (36) zur Kompensation der von der Vorrichtung (14) aufgenommenen dreidimensionalen Erfassungen umfasst, das geeignet ist, ein Bewegungsprofil des Fluggeräts während der Aufnahme zu definieren und die Erfassungen auf der Grundlage dieses Bewegungsprofils zu korrigieren.

**6.** Fluggerät nach einem der Ansprüche 1 bis 5, **dadurch gekennzeichnet, dass** es zudem ein Modul für den Zugriff auf ein dreidimensionales Modell der Oberfläche des Objekts und ein Modul für die Bestimmung der relativen Position des Fluggeräts in Bezug auf das dreidimensionale Modell der Oberfläche des zu untersuchenden Objekts umfasst, so dass es in der Lage ist, jedem von der Erfassungsvorrichtung (14) anvisierten Bereich von Interesse (12a, 12b, 12c) die Koordinaten des Bereiches von Interesse in einem Bezugspunkt des dreidimensionalen Modells der Oberfläche zuzuordnen.

**7.** Fluggerät nach einem der Ansprüche 1 bis 6, **dadurch gekennzeichnet, dass** dieses ferner ein Modul (51) zur drahtlosen Übertragung der Konturerfassungen an eine Bodenstation (50) umfasst.

**8.** Fluggerät nach einem der Ansprüche 1 bis 7, **dadurch gekennzeichnet, dass** dieses ferner ein Modul zur Bestimmung einer Tiefenkarte umfasst, das ein Untermodul zur Bestimmung einer Referenzkontur der Oberfläche des untersuchten Objekts aus einem bestimmten 3D-Modell der Oberfläche des untersuchten Objekts in Verbindung mit einem bestimmten mathematischen Modell und ein Untermodul zur Berechnung der Tiefenunterschiede zwischen den Erfassungen der Kontur der bestimmten Bereiche und der Referenzkontur umfasst.

**9.** Fluggerät nach einem der Ansprüche 1 bis 8, **dadurch gekennzeichnet, dass** die dreidimensionale Erfassungsvorrichtung (14) eine Kamera zur Emission von strukturiertem Licht, die die Emissionsquelle (15) der Referenzwelle bildet, und eine Kamera zur Erfassung von Bildern des durch strukturiertes Licht beleuchteten Bereiches von Interesse umfasst, die den Matrixempfänger (16) der reflektierten Welle bildet.

**10.** Fluggerät nach einem der Ansprüche 1 bis 8, **dadurch gekennzeichnet, dass** die dreidimensionale Erfassungsvorrichtung (14) ein Laserprofilometer, das die Emissionsquelle (15) der Referenzwelle bildet, und eine Kamera zum Erfassen von Bildern des durch das Laserprofilometer beleuchteten Bereiches von Interesse umfasst, die den Matrixempfänger (16) der reflektierten Welle bildet.

**11.** Fluggerät nach einem der Ansprüche 1 bis 8, **dadurch gekennzeichnet, dass** die dreidimensionale Erfassungsvorrichtung (14) einen Blitz-Lidar, der die Emissionsquelle (15) der Referenzwelle bildet, und eine Kamera zur Erfassung von Bildern des durch den Blitz-Lidar beleuchteten Bereiches von Interesse umfasst, die den Matrixempfänger (16) der reflektierten Welle bildet.

**12.** Fluggerät nach einem der Ansprüche 1 bis 11, **dadurch gekennzeichnet, dass** die motorisierten Mittel (11, 13) zum Heben und Bewegen des Fluggeräts mindestens vier Antriebsmotoren umfassen.

**13.** Verfahren zur Steuerung eines motorisierten Fluggeräts (10) nach einem der Ansprüche 1 bis 12, **dadurch gekennzeichnet, dass** es die Schritte umfasst:

- Definieren einer Liste von Bereiches von Interesse (12a, 12b, 12c) einer Oberfläche eines bestimmten zu untersuchenden Objekts,
- Definieren eines Navigationsprofils des Fluggeräts zwischen den verschiedenen Bereichen von Interesse (12a, 12b, 12c) gemäß einer bestimmten Chronologie,
- Bewegen des Fluggeräts (20) in Richtung eines ersten Bereiches von Interesse,
- Einstellen der Gondel (21) des Fluggeräts, so dass diese auf den mit der dreidimensionalen Erfassungsvorrichtung (14) zu messenden Bereich zeigt,
- in unmittelbarer Nähe des Bereiches von Interesse, Umschalten des Fluggeräts in den stabilisierten Modus und Auslösen der Aufnahme der dreidimensionalen Erfassung des Bereiches von Interesse,
- Umschalten des Fluggeräts in den Navigationsmodus, wenn die Aufnahme abgeschlossen ist,
- Bewegen des Fluggeräts in Richtung des nächsten Bereiches von Interesse des Navigationsprofils und Wiederholen der vorhergehenden Vorgänge bis zum letzten Bereiches von Interesse des genannten Navigationsprofils.

**Claims**

**1.** Motorized flying craft (10) for measuring the contour of a plurality of regions of interest (12a, 12b, 12c) of a surface of a predetermined object (9) to be inspected, said flying craft comprising:

- a carrier frame (20),
- motorized means (11, 13) for lifting and moving said carrier frame (20),
- an apparatus (14) for three-dimensional measurement of a region of interest (12a, 12b, 12c) targeted by said apparatus (14), which apparatus is mounted on a pod (21) which is mechanically connected to said carrier frame (20), said apparatus (14) comprising a wave emission source (15), said wave being referred to as a reference wave, a matrix receiver (16) of a wave reflected by said region of interest (12a, 12b, 12c) targeted by said apparatus (14), and a processing unit (38) configured to be able to determine a measurement of the contour of said region of interest (12a, 12b, 12c) targeted by said apparatus (14) from the analysis of said reference wave and said reflected wave,
- an automatic management system (34, 35) of said craft, which system is configured to be able to switch said craft from a mode referred to as navigation mode, in which the craft can be moved from one region of interest (12a, 12b, 12c) toward a subsequent region of interest (12a, 12b, 12c) by controlling motorized lifting and movement means (11, 13), to a mode referred to as stabilized mode, in which said motorized lifting movement means (11, 13) are controlled so as to be able to keep at least one kinematic parameter of said craft constant, selected from the group consisting of vehicle speed, vehicle acceleration, vehicle attitude and a function of one or more of these parameters, making it possible to minimize the vibration of said craft, and in which said measurement apparatus (14) can acquire a three-dimensional measurement of a region of interest (12a, 12b, 12c),

**characterized in that** the said automatic management system (34, 35) is configured to be able, in the vicinity of each region of interest, to switch from navigation mode to stabilized mode when said craft is in a state which is defined by at least one kinematic parameter of the craft and adjacent to a state referred to as the anticipation state, which is defined by at least this kinematic parameter of the craft, and determined from a state referred to as the acquisition state which corresponds to a target value of this kinematic parameter for carrying out the acquisition of this region of interest, and to a time delay referred to as the anticipation time delay which corresponds to the time necessary to guarantee that this parameter is kept constant by the craft, allowing the acquisition of a three-dimensional measurement of said region of interest (12a, 12b, 12c) by said measurement apparatus (14).

**2.** Craft according to claim 1, **characterized in that** said pod (21) comprises a motorized joint (22) having at least one pitch axis of the measurement apparatus (14) relative to said carrier frame (20), so as to be able to position said apparatus (14) opposite a region of interest (12a, 12b, 12c) to be measured.

**3.** Craft according to any of claims 1 or 2, **characterized in that** it further comprises at least one laser rangefinder (30, 31, 32) which is rigidly connected to said carrier frame (20) or to said pod (21) and which forms a sensor of the relative position of the flying craft with respect to said surface of the object to be inspected.

**4.** Craft according to claim 4, **characterized in that** said automatic management system (34, 35) is configured to be able to control the switch to stabilized mode as soon as the laser rangefinder(s) (30, 31, 32) determine(s) that the craft is at a predetermined position of said region of interest (12a, 12b, 12c).

**5.** Craft according to any of claims 1 to 4, **characterized in that** it further comprises a compensation module (36) of the three-dimensional measurements acquired by said apparatus (14) suitable for defining a movement profile of said craft during said acquisition and correcting said measurements on the basis of this movement profile.

**6.** Craft according to any of claims 1 to 5, **characterized in that** it further comprises a module for accessing a three-dimensional model of said surface of said object and a module for locating the relative position of the craft with respect to said three-dimensional model of said surface of said object to be inspected, so as to be able to associate, with each region of interest (12a, 12b, 12c) targeted by said measurement apparatus (14), the coordinates of the region of interest in a reference point of said three-dimensional model of said surface.

**7.** Craft according to any of claims 1 to 6, **characterized in that** it further comprises a module (51) for wireless transmission of the contour measurements to a ground station (50).

**8.** Craft according to any of claims 1 to 7, **characterized in that** it further comprises a module for determining a depth map comprising a sub-module for determining a reference contour of said surface of said inspected object from a predetermined 3D model of said surface of the inspected object associated with a predetermined mathematical model, and a sub-module for calculating the differences in depth between said measurements of the contour of said predetermined regions and said reference contour.

9. Craft according to any of claims 1 to 8, **characterized in that** said three-dimensional measurement apparatus (14) comprises a camera for emitting structured light, which forms said emission source (15) of said reference wave, and a camera for acquiring images of said region of interest illuminated by structured light, which forms said matrix receiver (16) of said reflected wave.

10. Craft according to any of claims 1 to 8, **characterized in that** said three-dimensional measurement apparatus (14) comprises a laser profilometer, which forms said emission source (15) of said reference wave, and a camera for acquiring images of said region of interest illuminated by said laser profilometer, which forms said matrix receiver (16) of said reflected wave.

11. Craft according to any of claims 1 to 8, **characterized in that** said three-dimensional measurement apparatus (14) comprises a flash lidar, which forms said emission source (15) of said reference wave, and a camera for acquiring images of said region of interest illuminated by said flash lidar, which forms said matrix receiver (16) of said reflected wave.

12. Craft according to any of claims 1 to 11, **characterized in that** said motorized means (11, 13) for lifting and moving said craft comprise at least four propulsion motors.

13. Method of controlling a motorized flying craft (10) according to any of claims 1 to 12, **characterized in that** it comprises the steps of:

> - defining a list of regions of interest (12a, 12b, 12c) of a surface of a predetermined object to be inspected,
> - defining a navigation profile of the craft between the different regions of interest (12a, 12b, 12c) according to a predetermined chronology,
> - moving the flying craft (20) toward a first region of interest,
> - adjusting the pod (21) of the craft so that it points to said region to be measured with said three-dimensional measurement apparatus (14),
> - in the immediate vicinity of the region of interest, switching the craft to stabilized mode and triggering the acquisition of the three-dimensional measurement of the region of interest,
> - when the acquisition is finished, switching the craft to navigation mode,
> - moving the flying craft toward the next region of interest of the navigation profile and repeating the previous operations until the last region of interest of said navigation profile.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016203151 A
- DE 102016206982 A1
- WO 2017121936 A